## Europäisches Patentamt
## European Patent Office
## Office européen des brevets

(19)

(11) Numéro de publication: **0 203 007**
**B1**

(12)

# FASCICULE DE BREVET EUROPEEN

(45) Date de publication du fascicule du brevet:
24.01.90

(51) Int. Cl.⁴: **F16B 39/28**

(21) Numéro de dépôt: 86401049.1

(22) Date de dépôt: 16.05.86

(54) Ecrou à zone élastique intégrée.

(30) Priorité: 17.05.85 FR 8507479
27.02.86 FR 8602719

(43) Date de publication de la demande:
26.11.86 Bulletin 86/48

(45) Mention de la délivrance du brevet:
24.01.90 Bulletin 90/4

(84) Etats contractants désignés:
BE DE GB IT SE

(56) Documents cités:
FR-A- 2 135 888
FR-A- 2 247 928
FR-A- 2 269 428
FR-A- 2 366 480
GB-A- 1 020 153
US-A- 2 836 473

(73) Titulaire: REGIE NATIONALE DES USINES RENAULT,
Boîte postale 103 8-10 avenue Emile Zola,
F-92109 Boulogne-Billancourt(FR)

(72) Inventeur: Grassineau, Jean-Pierre, 12, rue Montsouris,
F-78260 Acheres(FR)
Inventeur: Mauro, Oreste, 4 Bis, boulevard Eugene
Lagauche, F-91290 Saint Germain Les Arpajon(FR)
Inventeur: Tulasne, Michel, 21, rue Gay Lussac,
F-78800 Houilles(FR)

(74) Mandataire: Chassagnon, Jean-Alain et al, REGIE
NATIONALE DES USINES RENAULT (S.0804),
F-92109 Boulogne-Billancourt Cedex(FR)

## Description

L'invention est relative à un écrou à zone élastique intégrée, qui comprend un chambrage d'élasticité.

On connaît de nombreux dispositifs de fixation qui comportent un écrou freiné, en vue d'éviter tout desserage intempestif. Certain de ces dispositifs proposent d'associer une rondelle du type Belleville à un écrou, comme dans le document FR-A 2 366 480. Ces systèmes présentent l'inconvénient d'offrir un serrage avec une très grande variation de la force, quand il y a un faible écart de la dimension totale d'un empilage mécanique de pièces, cette écart de dimension pouvant atteindre facilement plusieurs dizième de millimètres dans les cas courants.

D'autres systèmes de blocage proposent des empilages de rondelles du type Belleville, qui sont intégrés dans une enceinte en tôle, afin de constituer un écrou. Chacune des rondelles de l'empilage a sa partie interne, qui pénètre dans le filet de la vis, et qui constitue ainsi un filetage intérieur. Ces systèmes de blocage présentent une variation de tension faible et acceptable pour les variations courantes des dimensions globales d'un empilage mécanique, mais ils en prennent une grande perte par frottement des faces des rondelles les unes sur les autres. De plus, ce phénomène de frottement est aléatoire, et il y a toujours une hystérisis. Enfin, quand on définit un couple de serrage, on ne sait pas qu'elle partie de ce couple est perdue dans les frottements, et qu'elle est la valeur du couple restant, c'est-à-dire du couple utile de tension pour le blocage de l'empilage des pièces mécaniques.

Le but de la présente invention est de proposer un écrou, qui permet en partant d'un couple de serrage déterminé, d'avoir un couple utile de tension précis ; cette tension sur l'empilage mécanique des pièces étant peu sensible à la variation des tolérances de chacune des pièces étant peu sensible à la variation des tolérances de chacune des pièces de cet empilage mécanique.

Selon un mode de réalisation de l'invention, l'écrou à zone élastique intégré, notamment pour assemblage mécanique avec un faible encombrement diamétral par rapport au diamètre du filetage, comporte du côté de la face d'appui, un chambrage ouvert vers l'intérieur de l'écrou et dont la face externe dudit chambrage est constituée par une partie annulaire élastique. Cette partie annulaire élastique a un alésage, qui est dimensionné de manière à laisser passer librement l'extrémité filetée sur laquelle vient se fixer l'écrou.

Selon un mode de réalisation de l'invention, le chambrage est constitué par une face externe perpendiculaire à l'axe de l'écrou, et par une face interne ; la face externe et la face interne étant reliée l'une à l'autre par une partie arrondie.

Selon un mode de réalisation de l'invention, la face interne est conique.

Selon un mode de réalisation de l'invention, la face d'appui est conique, de manière à assurer une zone d'application de l'effort de tension sur toute ladite face d'appui.

L'écrou à zone élastique intégré selon l'invention, présente ainsi l'avantage d'avoir une faible raideur, ce qui lui permet d'assurer un serrage correct d'un empilage mécanique, quel que soit l'écart acceptable des tolérances de cet empilage mécanique. De plus, l'écrou selon l'invention est en une seule pièce, ce qui évite la plupart des pertes par frottements ; le couple de serrage est presque totalement utilisé ; et l'écrou selon l'invention a de ce fait un excellent rendement.

L'invention sera mieux comprise par l'étude d'un mode de réalisation particulier décrit à titre nullement limitatif et illustré par les dessins annexés, sur lesquels :

- la figure 1 est une coupe de l'écrou selon l'invention;
- la figure 2 est une vue suivant II de la figure 1 ;
- la figure 3 est une coupe de l'écrou selon un autre mode de réalisation de l'invention ;
- les figures 4 et 5 sont des coupes d'un exemple d'assemblage mécanique réalisé avec un écrou selon l'invention.

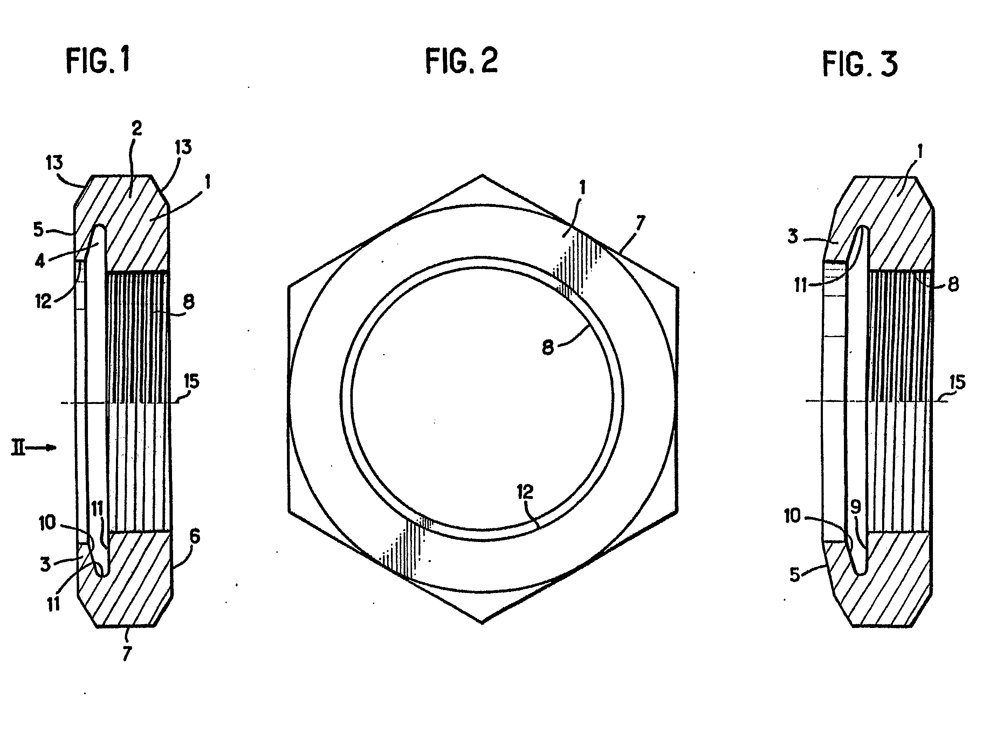

Les figures 1 et 2 représentent un écrou 1 à zone élastique intégrée selon l'invention. Cet écrou 1 à zone élastique intégrée, comporte un corps 2, qui est muni d'un chambrage 4, ledit chambrage 4 étant associé à une partie annulaire 3 élastique. Ce chambrage 4 et cette partie annulaire 3 sont disposés du côté de la face d'appui 5 de l'écrou 1, qui agit sur l'empilage mécanique à serré.

L'écrou 1 a une face d'extrémité 6, qui est plate et généralement perpendiculaire à l'axe 15 dudit écrou 1; tandis que la face latérale 7 peut être d'une forme quelconque, selon le mode de serrage adopté. Dans le cas des figures, cette face latérale 7 est hexagonale. De plus, l'écrou 1 est muni de deux chanfreins 13, qui sont disposés sur chacune des faces d'appui 5 et d'extrémité 6.

La partie annulaire 3 a un alésage 12, qui est dimensionné de manière à laisser passer librement l'extrémité filetée 14, sur laquelle vient se fixer ledit écrou 1 ; c'est-à-dire que cet alésage 12 est dans la plupart des cas légèrement plus grand que le diamètre du filetage 8 de l'écrou 1.

Le chambrage 4 a une face externe 9 qui est sensiblement perpendiculaire à l'axe 15, et une face interne 10 conique. La face externe 9 et la face interne 10 sont reliées par une partie arrondie 11. Le chambrage 4 et la partie annulaire 3 sont dimensionnés de manière à avoir la raideur voulue pour le serrage mécanique demandé.

L'écrou 1 selon l'invention est appliqué notamment pour des assemblages mécaniques, où il doit présenter un faible encombrement diamètrale par rapport au diamètre du filetage 8.

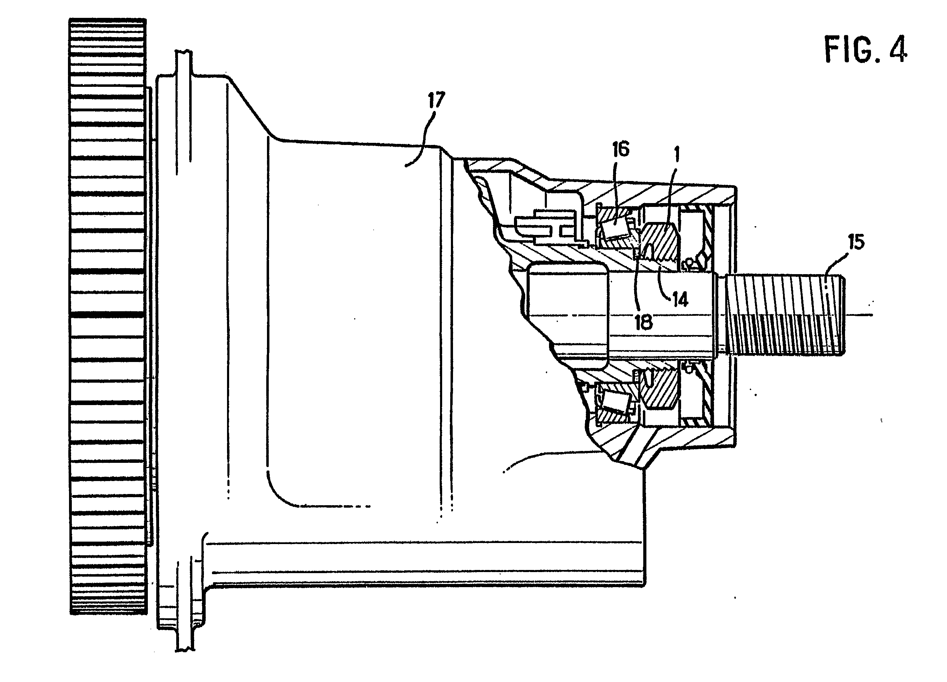

La figure 4 montre un exemple de montage où l'assemblage mécanique est réalisé avec un écrou 1 selon l'invention. L'écrou 1 vient s'engager et se visser sur l'extrémité filetée 14, de manière à bloquer l'empilage des cales 18 sur le boîtier de différentiel 17. L'écrou 1 selon l'invention permet ainsi d'assurer la mise en place correcte des roulements 16.

La figure 3 représente un autre mode de réalisation de l'écrou 1 a zone élastique intégré selon l'invention. Dans cette réalixation, la face d'appui 5 est conique, de manière à assurer une zone d'application de l'effort de tension sur toute ladite face d'appui 5.

Selon un mode de réalisation de l'invention, l'écrou à zone élastique intégré est monté sur un ensemble mécanique comportant deux roulements à rouleaux coniques. Ces roulements à rouleaux coniques sont disposés dans un carter, et sur un élément tournant. L'écrou à zone élastique intégré selon l'invention, vient :

- d'une part s'appliquer sur la bague intérieure du roulement à rouleaux coniques correspondant, au moyen de sa partie massive, qui est le corps dudit écrou, de manière à réaliser la précontrainte:

- et d'autre part se bloquer sur la cale de réglage de la précontrainte au moyen de sa partie annulaire élastique : de manière à ce que la partie annulaire élastique appuie toujours sur ladite cale de réglage.

Selon un mode de réalisation de l'invention, l'élément tournant consiste en un boîtier de différentiel.

Selon un mode de réalisation d l'invention, l'élément tournant consiste en un arbre de boîte de vitesses.

Le dispositif de montage de l'écrou à zone élastique intégré selon l'invention, présente ainsi les avantages suivants :
- il permet l'établissement de la précontrainte par l'intermédiaire de la partie massive de l'écrou à zone élastique intégré selon l'invention :
- il permet d'assurer l'indéssérabilité de l'ensemble mécanique par l'intermédiaire de la partie élastique dudit écrou selon l'invention.

L'invention sera mieux comprise par l'étude d'un mode de réalisation particulier décrit à titre nullement limitatif et illustré par les dessins annexés, sur lesquels :

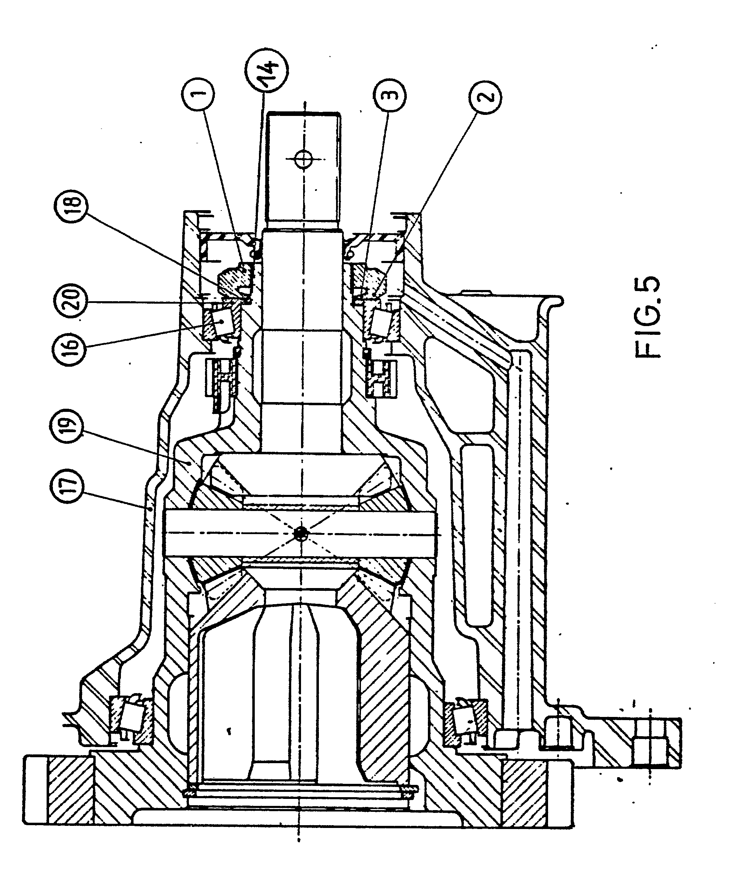

- la figure 5 représente en coupe l'ensemble du dispositif de montage de l'écrou à zone élastique intégré selon l'invention.

Le dispositif de montage représenté sur la figure 1 comporte un élement tournant monté dans un carter 19 à l'aide de deux roulements à rouleaux coniques 16. Ces roulements à rouleaux coniques 16 sont serrés dans le carter 19.

Dans le cas de la figure 1, l'élément tournant est un boîtier de différentiel 17.

L'écrou à zone élastique intégré vient s'engager et se visser sur l'extrémité filetée 14 du boîtier de différentiel 17 ; afin d'assurer la mise en place de l'ensemble mécanique, qui comprend une cale de réglage 18 de la précontrainte. L'écrou à zone élastique intégré 1 vient s'appliquer sur la bague intérieure 20 du roulement à rouleaux coniques 16 correspondant au moyen de sa partie massive qui est le corps 2, de manière à réaliser la précontrainte. L'écrou à zone élastique intégré 1 vient se bloquer sur la cale de réglage 18 de la précontrainte au moyen de sa partie annulaire élastique 3, de manière à ce que la partie annulaire élastique 3 appuie toujours sur ladite cale de réglage 18.

Au moment du montage de l'ensemble mécanique et du serrage de l'écrou à zone élastique intégré 1, cet écrou 1 réalise la précontrainte par rattrapage du jeux mesuré, et il créé une tension sur la partie annulaire élastique 3, qui constitue le flux d'effort fermé assurant l'indéssérabilité du système.

Lors du fonctionnement de l'ensemble mécanique, et suivant le cas de transmission des efforts par cet ensemble mécanique, la bague intérieure 20 du roulement à rouleaux coniques 13 correspondant à l'écrou à zone élastique intégré 1 tend à s'appuyer sur la partie massive 2 de l'écrou 1, ou tend à s'écarter dudit écrou 1. Dans tous les cas de fonctionnement, la partie élastique 3 est toujours sous tension, car le flux d'effort se referme en toute circonstance entre la cale de réglage 18, l'élément tournant qui dans le cas de la figure est le boîtier de différentiel 17, et l'écrou 1.

Un autre mode de réalisation non représenté sur la figure consiste à appliquer ceci au montage d'un élément tournant qui est un arbre de boîte de vitesses.

## Revendications

1. Ecrou (1) à zone élastique intégrée, notamment pour assemblage mécanique avec un faible encombrement diamètral par rapport au diamètre du filetage (8), caractérisé en ce qu'il comporte du côté de la face d'appui (5), un chambrage (4) ouvert vers l'intérieur de l'écrou (1) et dont la face externe dudit chambrage (4) est constituée par une partie annulaire (3) élastique dont l'alésage (12) est dimensionné de manière à laisser passer librement l'extrémité filetée (14) sur laquelle vient se fixer ledit écrou (1).

2. Ecrou (1) selon la revendication 1, caractérisé en ce que le chambrage (4) est constitué par une face externe (9) perpendiculaire à l'axe (15) de l'écrou, et une face interne (10), qui sont reliées l'une à l'autre par une partie arrondie (11).

3. Ecrou (1) selon la revendication 2, caractérisé en ce que la face interne (10) est conique.

4. Ecrou (1) selon la revendication 3, caractérisé en ce que la face d'appui (5) est conique, de manière à assurer une zone d'application de l'effort de tension sur toute ladite face d'appui (5).

5. Ensemble mécanique comportant deux roulements à rouleaux coniques (16) montés dans un carter (19) et sur un élément tournant (17), et comportant un écrou selon la revendication 1, l'écrou venant :
- d'une part s'appliquer sur une bague intérieure (20) du roulement à rouleaux coniques (16) correspondant au moyen de sa partie massive qui est le corps (2), de manière à réaliser la précontrainte ;
- et d'autre part se bloquer sur une cale de réglage (18) de la précontrainte au moyen de sa partie annulaire (3) élastique ; de manière à ce que ladite partie annulaire (3) élastique appuie toujours sur ladite cale de réglage (18).

6. Ensemble mécanique selon la revendication 5, caractérisé en ce que l'élément tournant consiste en un boîtier de différentiel (17).

7. Ensemble mécanique selon la revendication 5, caractérisé en ce que l'élément tournant consiste en un arbre de boîte de vitesses.

## Claims

1. A nut (1) with integrated elastic zone, in particular for mechanical assembly with a small diametral size with respect to the diameter of the screwthread (8), characterised in that it comprises on the side of the bearing face (5) a recess means (4) which is open towards the interior of the nut (1) and in which the external face of said recess means (4) is formed by an annular elastic portion (3), the bore (12) of which is so dimensioned as to allow the screwthreaded end (14) on to which said nut (1) is to be fixed to pass freely therethrough.

2. A nut (1) according to claim 1, characterised in that the recess means (4) is formed by an external face (9) which is perpendicular to the axis (15) of the nut and an internal face (10), which faces are connected together by a rounded portion (11).

3. A nut (1) according to claim 2, characterised in that the internal face (10) is conical.

4. A nut (1) according to claim 3, characterised in that the bearing face (5) is conical so as to provide a zone for application of the stressing force over the whole of said bearing face (5).

5. A mechanical assembly comprising two rolling bearings (16) with tapered rollers which are mounted in a casing (19) and on a rotary element (17) and comprising a nut according to claim 1, the nut being:
   - on the one hand applied against an internal bearing race (20) of the corresponding rolling bearing (16) with tapered rollers by means of its solid portion which is the body (2) so as to produce the prestressing effect: and
   - on the other hand locked against a shim member (18) for adjusting the prestressing effect by means of its annular elastic portion (3); in such a way that said annular elastic portion (3) always bears against said adjusting shim member (18).

6. A mechanical assembly according to claim 5, characterised in that the rotary element consists of a differential casing (17).

7. A mechanical assembly according to claim 5, characterised in that the rotary element consists of a gearbox shaft.

## Patentansprüche

1. Mutter mit integrierter elastischer Zone, insbesondere für einen mechanischen Aufbau mit geringen diametralen Abmessungen bezüglich des Gewindedurchmessers (S), dadurch gekennzeichnet, daß sie auf Seite der Stützfläche (5) eine Aussparung (4) aufweist, die zum Inneren der Mutter (1) hin offen ist und wobei die Außenfläche der Aussparung (4) aus einem ringförmigen elastischen Abschnitt (3) besteht, dessen Bohrung (12) derart bemessen ist, daß sie ohne weiteres das Gewindeende (14), auf das die Mutter (1) geschraubt wird, hindurch läßt.

2. Mutter nach Anspruch 1, dadurch gekennzeichnet, daß die Aussparung (4) aus einer Außenfläche (9) besteht, die senkrecht zur Achse (15) der Mutter verläuft und aus einer Innenfläche (10) besteht, die miteinander über einen abgerundeten Abschnitt (11) verbunden sind.

3. Mutter nach Anspruch 2, dadurch gekennzeichnet, daß die Innenfläche (10) konisch ist.

4. Mutter nach Anspruch 3, dadurch gekennzeichnet, daß die Stützfläche (5) konisch ist, derart, daß eine mit Spannung beaufschlagte Anschlagzone über die gesamte Stützfläche (5) entsteht.

5. Mechanischer Aufbau mit zwei Lagern mit konischen Walzen (16), die in einem Gehäuse (19) angeordnet sind, auf einem sich drehenden Teil (17) und mit einer Mutter nach Anspruch 1, die:
   - sich einerseits auf einem Innenring (20) des Lagers mit konischen Walzen (16) abstützt entsprechend ihrem massiven Abschnitt, der den Körper 2 bildet, um so eine Vorspannung zu erzeugen und
   - andererseits mit einem Ausrichtkeil (18) für die Vorspannung mittels ihres elastischen ringförmigen Abschnitts (3) derart in Eingriff steht, daß sich der ringförmige elastische Abschnitt (3) ständig auf dem Ausrichtkeil (18) abstützt.

6. Mechanischer Aufbau nach Anspruch 5, dadurch gekennzeichnet, daß das drehende Teil ein Differentialkäfig (17) ist.

7. Mechanischer Aufbau nach Anspruch 5, dadurch gekennzeichnet, daß das drehende Teil eine Getriebewelle ist.

EP 0 203 007 B1

FIG. 3

FIG. 2

FIG. 1

FIG. 4

FIG.5